(19) Europäisches Patentamt
European Patent Office
Office européen des brevets

(11) EP 1 807 353 B1

(12) FASCICULE DE BREVET EUROPEEN

(45) Date de publication et mention de la délivrance du brevet:
**18.08.2010 Bulletin 2010/33**

(21) Numéro de dépôt: **05809106.7**

(22) Date de dépôt: **07.10.2005**

(51) Int Cl.:
***C01G 27/04*** *(2006.01)*

(86) Numéro de dépôt international:
**PCT/FR2005/002481**

(87) Numéro de publication internationale:
**WO 2006/040458 (20.04.2006 Gazette 2006/16)**

# (54) PROCEDE DE SEPARATION DU ZIRCONIUM ET DU HAFNIUM

VERFAHREN ZUR TRENNUNG VON ZIRKONIUM UND HAFNIUM

METHOD FOR SEPARATING ZIRCONIUM AND HAFNIUM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.10.2004 FR 0410714**

(43) Date de publication de la demande:
**18.07.2007 Bulletin 2007/29**

(73) Titulaire: **Compagnie Européenne du Zirconium - CEZUS**
**92400 Courbevoie (FR)**

(72) Inventeurs:
- **DELONS, Laurence**
  **F-69230 Saint Genis Laval (FR)**
- **LAGARDE, Stéphane**
  **F-38220 ST PIERRE DE MESAGE (FR)**
- **PORIEL, Ludovic**
  **F-92260 Fontenay aux roses (FR)**
- **LEMAIRE, Marc**
  **F-69100 VILLEURBANNE (FR)**
- **FAVRE-REGUILLON, Alain**
  **F-69100 VILLEURBANNE (FR)**
- **PELLET-ROSTAING, Stéphane**
  **F-69100 VILLEURBANNE (FR)**

(74) Mandataire: **Colombet, Alain André et al**
**Cabinet Lavoix**
**2, Place d'Estienne d'Orves**
**75441 Paris Cedex 09 (FR)**

(56) Documents cités:
**EP-A1- 0 123 634** **FR-A1- 2 615 848**
**FR-A2- 2 626 445** **US-A- 5 176 878**

- **PATENT ABSTRACTS OF JAPAN vol. 006, no. 174 (C-123), 8 septembre 1982 (1982-09-08) & JP 57 088031 A (ISHIZUKA HIROSHI), 1 juin 1982 (1982-06-01)**
- **PATENT ABSTRACTS OF JAPAN vol. 006, no. 114 (C-110), 25 juin 1982 (1982-06-25) & JP 57 042540 A (ISHIZUKA HIROSHI), 10 mars 1982 (1982-03-10)**
- **PATENT ABSTRACTS OF JAPAN vol. 006, no. 114 (C-110), 25 juin 1982 (1982-06-25) & JP 57 042539 A (ISHIZUKA HIROSHI), 10 mars 1982 (1982-03-10)**
- **PATENT ABSTRACTS OF JAPAN vol. 006, no. 114 (C-110), 25 juin 1982 (1982-06-25) & JP 57 042538 A (ISHIZUKA HIROSHI), 10 mars 1982 (1982-03-10)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 807 353 B1

## Description

La présente invention est relative à un procédé permettant la séparation et la purification du zirconium contenu dans des mélanges contenant hafnium et zirconium. Elle est également relative à un procédé permettant la séparation et la purification du hafnium contenu dans ces mélanges.

Le minerai zircon contient du zirconium, de façon majoritaire, et du hafnium (généralement de 1 à 3% en poids). Pour son usage dans la filière nucléaire, après carbochloration du minerai, le zirconium doit être débarrassé au maximum du hafnium, lequel se retrouve donc dans les fractions résiduelles des procédés de purification du zirconium. Différentes techniques ont été développées. Parmi elles, on peut citer des cristallisations multiples des fluorures de potassium et de zirconium, les méthodes d'extraction liquide-liquide et la distillation extractive en sels fondus. Le hafnium est aussi parfois valorisé, à partir des sous-produits de la purification du zirconium. Il n'existe pas actuellement de procédé réellement performant pour la récupération et la purification du hafnium.

Aucun des procédés de séparation zirconium/hafnium utilisés actuellement n'est dépourvu d'inconvénients. Ainsi, les procédés classiques d'extraction liquide-liquide utilisent des solvants organiques du type MIBK et $NH_4SCN$. Le tétrachlorure de zirconium hafnié issu de l'étape initiale de carbochloration est hydrolysé ; on obtient ainsi des oxychlorures de Zr et de Hf, qui sont ensuite séparés dans de nombreuses colonnes après ajout de MIBK (Methyl IsoButyl Ketone) et de $NH_4SCN$ (thiocyanate d'ammonium). Les oxychlorures sont ensuite précipités sous forme d'hydroxyde au moyen d'ammoniaque par exemple, puis calcinés et on obtient ainsi de la zircone $ZrO_2$ (et du $HfO_2$). Ces oxydes sont carbochlorés une deuxième fois afin d'obtenir du tétrachlorure de zirconium $ZrCl_4$ (et $HfCl_4$). Ces procédés liquide-liquide génèrent de nombreux effluents, soit gazeux, qui nécessitent des traitements avec des fours haute température, soit liquides, qui contiennent des substances dangereuses pour l'homme et l'environnement. En particulier, le solvant MIBK est volatile et fortement explosif.

L'un des procédé les plus performants employés actuellement pour la purification du zirconium est celui connu sous le nom de procédé de séparation en sels fondus, ou distillations extractive en sels fondus (FR-A-2 250 707 et FR-A-2 629 360). Ce procédé utilise une colonne de distillation à plusieurs plateaux, supportant chacun une couche de sels fondus. Un mélange de $ZrCl_4$ et $HfCl_4$, issu de la carbochloration du minerai zircon, est introduit dans la colonne à l'état gazeux. Une fraction $ZrCl_4$ est récupérée dans la phase solvant en pied de colonne, tandis qu'une fraction résiduelle enrichie en $HfCl_4$ est entraînée avec la phase vapeur en tête de colonne. Cette fraction résiduelle peut ainsi comporter par exemple de l'ordre de 70% de $ZrCl_4$ et de 30% de $HfCl_4$. Une installation industrielle fonctionnant selon ce principe peut être reconditionnée pour retraiter cette fraction résiduelle et récupérer le hafnium, ce qui se traduit par un fonctionnement discontinu de l'installation.

Enfin, la demande de certaines industries en hafnium toujours plus pur induit aussi un besoin en un procédé permettant de purifier des quantités importantes de hafnium très pur.

Un objectif de l'invention est donc de proposer un nouveau procédé industriel permettant de séparer et purifier efficacement, en continu, le zirconium d'un mélange de zirconium et de hafnium.

Un autre objectif de l'invention est de proposer un procédé industriel permettant de séparer et purifier efficacement, en continu, à la fois le hafnium et le zirconium.

Un autre objectif de l'invention est de proposer un tel procédé qui soit compatible avec les techniques actuelles de carbochloration du minerai zircon et de production de Hf et Zr métalliques, de sorte qu'il puisse être intégré dans un schéma de séparation/purification à partir du minerai zircon.

Un autre objectif encore de l'invention est de proposer un procédé plus respectueux de l'environnement et moins dangereux pour l'utilisateur que les procédés classiques d'extraction liquide-liquide.

Ces objectifs, ainsi que d'autres, sont atteints conformément à l'invention, à l'aide d'un procédé pour séparer le zirconium du hafnium, d'un mélange de $ZrCl_4$ et $HfCl_4$ contenant 3 % en poids de Hf exprimé par rapport à Hf + Zr (% Hf/Hf + Zr) ou moins. Le procédé comprend les étapes suivantes :

(1) hydrolyser un mélange $ZrCl_4$ et $HfCl_4$ dans une solution aqueuse d'acide inorganique fort, de manière à former une solution aqueuse acide ayant de 7 à 12 moles d'acide par litre ;
(2) faire passer la solution obtenue à l'étape (1) dans une résine échangeuse d'anion ;
(3) éventuellement, mais de préférence, laisser éluer une fraction de la solution aqueuse acide, enrichie en hafnium ;
(4) débarrasser la résine de la solution acide contenant Zr et Hf ; puis
(5) faire passer dans la résine une solution aqueuse pour décrocher les composés du zirconium fixés à la résine, et récupérer une fraction enrichie en zirconium.

On notera que dans toute la description et les revendications, les termes « comprend », « comprenant » et similaires dérivés du verbe « comprendre », ont la signification usuellement attribuée en droit des Etats-Unis d'Amérique ; ces termes signifient que d'autres caractéristiques peuvent être ajoutées, ; ils ont le même sens que « inclure », « incluant », etc.

Le procédé s'applique à un mélange de $ZrCl_4$ et $HfCl_4$ issu de la carbochloration du minerai zircon. Un tel mélange comprend généralement de 1 à 3 % en poids de Hf/Hf + Zr.

De préférence, le mélange $ZrCl_4$ + $HfCl_4$ engagé à l'étape (1) est sous forme solide, et notamment de poudre.

Suivant un aspect préféré, la résine utilisée à l'étape (2) est mouillée (conditionnée ou pré-conditionnée) avec une solution aqueuse d'acide inorganique fort ayant de 7 à 12 moles d'acide par litre. Une modalité préférée consiste à conditionner la résine avec une solution comprenant le même acide qu'à l'étape (1) et ayant une concentration en acide proche ou identique à la solution obtenue à cette étape.

Sans vouloir être lié par la théorie, on pense que la solution dite d'alimentation obtenue à l'étape (1) contient des composés du zirconium sous forme anionique, et des composés du hafnium généralement sous forme non ionique, que lors du passage dans la résine, les anions principalement à base de zirconium sont retenus par la résine, par un processus d'échange d'ions, si bien que, avant saturation d'une certaine proportion des groupements de la résine par les ions à base de zirconium, l'éluat sortant de la résine contient surtout les composés du hafnium.

Suivant un aspect particulièrement avantageux, à l'étape (3), on fait passer la solution d'alimentation de manière à produire un éluat riche en hafnium, qui est récupéré.

Le degré de pureté ou d'enrichissement en hafnium dépend de la hauteur de colonne et du débit de la solution d'alimentation. Il peut varier en fonction de l'instant où le prélèvement est effectué. On peut obtenir, par exemple, des teneurs en zirconium métal inférieures ou égales à 100 ppm molaire exprimée par rapport à l'hafnium métal, inférieures ou égales à 50 ppm, inférieures ou égales à 30 ppm, e.g. d'environ 20 ppm molaire de Zr métal par rapport à Hf métal.

Cette phase d'élution de fraction riche en hafnium peut être contrôlée pendant le processus de purification, auquel cas on procède à des prélèvements d'éluat et à un contrôle concernant leur teneur en composé du zirconium et/ou du hafnium. Les éluats peuvent être analysés par exemple par ICP-AES (Inductively Coupled Plasma - Atomic Emission Spectroscopy) pour déterminer la pureté des fractions en hafnium ou en zirconium, ce qui permet notamment de sélectionner les fractions, s'il y a lieu. Davantage de précisions sont données dans la description détaillée. On peut aussi disposer d'un mode opératoire standardisé.

Une fois qu'un certain degré de saturation des groupements de la résine a été atteint, l'éluat sortant de la résine tend à correspondre globalement à la solution d'alimentation.

A l'étape (4), on procède à un nettoyage de la résine afin d'éliminer le zirconium et le hafnium qui étaient présents dans la résine, en interstitiel, sans y être accroché.

Suivant une première modalité de cette étape (4), on vide la résine de son contenu liquide, par exemple par gravité ou par une chasse au moyen d'air ou de gaz (e.g. azote).

Suivant une deuxième modalité de cette étape (4), on fait circuler dans la résine une solution de rinçage, qui a la particularité de ne pas entraîner le décrochage des composés du zirconium liés à la résine par interaction ionique. On utilise de préférence une solution d'acide inorganique fort ayant de 7 à 12 moles par litre, et ayant un nombre de moles d'acide par litre supérieur ou sensiblement identique à la solution d'alimentation formée à l'étape (1). Par sensiblement identique, on entend que la concentration en acide peut varier par rapport à l'étape (1) y compris vers des valeurs inférieures, tout en restant dans des limites qui n'entraînent pas de décrochage sensible des composés du zirconium liés à la résine par interaction ionique. On préfère utiliser le même acide (e.g. HCl) qu'à l'étape (1). On préfère aussi utiliser la même concentration en acide.

Suivant une troisième modalité de l'étape (4), on commence par vider la résine, e.g. par gravité ou par chasse, puis on la rince comme il vient d'être décrit.

Suivant un aspect préféré, l'étape (4) est effectuée juste après la récupération de la fraction riche ou de la dernière fraction riche en hafnium. Le suivi de la phase d'élution par analyse des éluats mentionné plus haut permet de déterminer ce moment où il devient inutile de poursuivre l'alimentation en mélange zirconium et hafnium.

La solution issue de l'étape (4) peut être recyclée à l'étape (1) en complément de la solution d'alimentation, et moyennant les ajustements nécessaires pour respecter l'acidité mentionnée à l'étape (1).

Lorsque la récupération du hafnium n'est pas un objectif, l'étape (3) peut être omise et l'étape (4) peut débuter tôt dès qu'un niveau de saturation de la résine en Zr suffisant a été atteint.

Après l'étape (4), on procède à l'étape (5) à un lavage à l'eau ou avec une solution aqueuse équivalente qui permet de décrocher les composés du zirconium liés à la résine par interaction ionique, et la récupération d'une solution aqueuse riche ou purifiée en zirconium.

Par « solution aqueuse équivalente », on entend une solution aqueuse capable de décrocher le composé du zirconium, par exemple une solution d'acide de force inférieure à la solution utilisée aux étapes précédentes, e.g. une solution aqueuse comportant de 0 à 7 moles, plus particulièrement de 0 à 6 moles d'acide par litre, choisie inférieure à la solution utilisée précédemment.

Suivant une modalité particulière de cette étape (5), on procède à un décrochage graduel à l'aide de solutions aqueuses ayant des concentrations en acide décroissantes. De préférence, on utilise de l'eau en dernier lieu. Par exemple on réalise au moins un premier décrochage à l'aide d'une solution aqueuse acide conforme (par exemple HCl 0,1 à 7, notamment 0,1 à 6 moles par litre) suivi d'un décrochage de finition à l'eau.

La ou les solutions de décrochage entraînent le décrochage des composés métalliques fixés à la résine, et cette étape permet donc de récupérer une ou plusieurs fractions riches ou purifiées en zirconium. On peut ainsi récupérer par exemple une ou des fractions ayant des teneurs en Hf métal inférieures ou égales à 500, 100, 80, 50 ou 20 ppm en masse exprimé par rapport à Zr+Hf.

Suivant une autre caractéristique, la fraction riche en zirconium subit au moins une fois encore la série des étapes (1) à (5), soit seule, soit comme complément d'une solution d'alimentation telle que définie plus haut. De préférence, on traite ladite fraction de manière à produire une solution aqueuse acide ayant de 7 à 12 moles d'acide par litre.

L'acide inorganique fort utilisé dans les différentes étapes est défini comme ayant un pKa par rapport à l'eau compris entre -12 et 4. Il est de préférence choisi parmi HCl et $H_2SO_4$. Suivant un mode de réalisation préféré, la solution acide formée à l'étape (1) et les solutions d'acide utilisées aux autres étapes contiennent de 7,5 à 9,5 moles d'acide par litre. De préférence, les solutions d'acide utilisées lors des différentes étapes sont similaires ou identiques. Suivant le mode de réalisation préféré de l'invention, on utilise des solutions aqueuses de HCl à toutes les étapes, et notamment des solutions contenant de 7,5 à 9,5 moles d'acide par litre.

La résine utilisée comporte une phase solide qui résiste aux solutions acides employées dans la conduite du procédé. Convient toute résine organique usuelle portant des groupements fonctionnels cationiques, et dont le contre-ion (anion) est capable de s'échanger avec les composés anioniques du zirconium présents dans la solution acide d'alimentation conforme à l'invention. Ces groupements sont avantageusement des groupements amine, ammonium et/ou azine.

Les résines organiques peuvent être des résines anioniques fortes ou faibles. Leurs groupements fonctionnels sont de préférence représentés par, ou comprennent :

- les amines primaires, secondaires ou tertiaires, les substituants autres que H étant préférentiellement choisis parmi : alkyle linéaire ou ramifié en $C_1$ à $C_6$, phényle ou alkylphényle, avec alkyle comme défini supra, hydroxylalkyle linéaire ou ramifié en $C_1$ à $C_6$, et combinaisons ; dans un mode de réalisation préféré, les substituants autres que H sont des alkyles ;
- les ammoniums quaternaires dans lesquels les substituants peuvent être choisis parmi : alkyle, linéaire, ramifié ou cyclique, en $C_1$ à $C_6$, phényle, alkylphényle avec alkyle comme défini supra, hydroxyalkyle linéaire ou ramifié en $C_1$ à $C_6$, et combinaisons ; dans un mode de réalisation préféré, les substituants sont des alkyles ;
- les azines : les hétérocycles azotés tels que pyridine, 1,2-diazabenzène (ou pyridazine), 1,3-diazabenzène (ou pyrimidine) et 1,4-diazabenzène (ou pyrazine), 1,2,3-triazabenzène (ou 1,2,3-triazine), 1,2,4-triazabenzène (1,2,4-triazine), 1,3,5-triazabenzène (ou 1,3,5-triazine), et les analogues ammoniums quaternaires correspondants obtenus par substitution des azotes par des groupements alkyles linéaires ou ramifiés en $C_1$-$C_6$.

Il est préférable d'utiliser des résines dont le contre-ion est de même nature que l'acide utilisé pour la solution acide. Avec HCl, on préfère utiliser ces résines sous forme de chlorure (contre-ion $Cl^-$). Avec l'acide sulfurique, on préfère utiliser ces résines sous forme de sulfate (contre-ion $SO_4^=$).

Suivant un premier mode de réalisation, la phase solide est formée de résine sous forme particulaire, e.g. sous forme de billes plus ou moins sphériques, ayant des dimensions moyennes de particule ou diamètres moyens appropriés, généralement compris entre 30 et 800 micromètres. L'homme du métier sait parfaitement choisir le polymère ou copolymère formant la phase solide, son degré de réticulation et la taille des particules. Les résines utilisées dans les exemples ont montré que des dimensions moyennes de particule comprises entre 100 et 700 micromètres, de préférence entre 200 et 600 micromètres étaient bien adaptées.

Parmi les polymères et copolymères utilisables, on peut citer ceux à base de motifs styréniques, acrylates et méthacrylates. Conformément à l'invention, on peut donc employer des résines du type polystyrène, polyacrylate, polyméthacrylate et les copolymères polyacrylate/polyméthacrylate. Les résines à base de polystyrène constituent une modalité préférée.

Suivant un deuxième mode de réalisation, la résine comporte des particules minérales fonctionnalisées par des fonctions similaires à celles décrites pour les résines organiques, en particulier amines, ammoniums quaternaires et azines (supra). Les particules minérales composant une telle résine sont par exemple des particules de silice, zéolithes, aluminosilicates et leurs mélanges.

Suivant un troisième mode de réalisation, la résine comporte des particules minérales (e.g. silice, zéolithes, aluminosilicates et leurs mélanges), enrobées ou portant en surface un polymère ou copolymère organique fonctionnalisé tel que décrit supra.

La capacité de la résine à fixer les ions métalliques exprimée en milli-équivalent par mL de résine humide est de préférence supérieure à 0,5, mieux encore supérieure ou égale à1.

Le procédé de l'invention ne nécessite pas une installation complexe. Il peut ainsi être conduit dans une colonne ou dans tout récipient (ci-après colonne ou analogue), de volume adapté au volume de résine employé, ce volume étant lui-même adapté à la solution à traiter, de manière à purifier le zirconium et éventuellement le hafnium à partir de la

même colonne ou analogue.

Un paramètre de fonctionnement est le débit de la solution acide dans la colonne ou analogue. Le débit ne doit pas être trop rapide pour que l'échange d'ions puisse se faire convenablement. Mais il doit être suffisant pour assurer que le procédé puisse se dérouler dans des conditions de rapidité convenables, et le cas échéant favoriser une concentration rapide en hafnium dans l'éluat à l'étape (3) dès que la résine est saturée en composés du hafnium. Ce paramètre peut donc être facilement appréhendé par de simples essais de routine, et analyse des éluats par exemple par ICP-AES. On peut aussi disposer d'un procédé standardisé.

Dans la présente description, la notion de volume se réfère au volume de résine utilisé. Ainsi, si l'on parle de 2 volumes de solution, cela signifie que l'on utilise un volume de solution représentant 2 fois le volume de la résine utilisée.

Après rinçage à l'eau et/ou avec une solution acide de force réduite à l'étape (5), la résine peut être réutilisée. Suivant une modalité préférée, la résine est re-conditionnée par la solution d'acide, ce qui permet d'éliminer l'eau ou solution aqueuse équivalente et de mettre la résine dans des conditions optimales pour un nouveau cycle de séparation/purification.

Avant ce re-conditionnement, on peut procéder au préalable à l'élimination de l'eau ou solution aqueuse équivalente par gravité (purge) ou par chasse au moyen d'air ou de gaz.

Quoique cela ne soit pas préféré, l'on peut se passer du conditionnement de la résine à l'étape (2). Dans ce cas, avant ré-utilisation de la résine, on peut éventuellement éliminer l'eau ou solution aqueuse équivalente issue de l'étape (5) par gravité (purge) ou par chasse au moyen d'air ou de gaz.

Le procédé de l'invention est remarquable en ce sens que les échanges d'ions et les décrochages/lavages sont effectués sans avoir recours à des milieux alcalin. Le procédé se révèle avantageux pour l'intégrité et la conservation de la résine, la résine n'étant pas exposée à des changements de pH acide à pH alcalin.

Dans les conditions de fonctionnement du procédé de l'invention, la température n'est pas un paramètre critique et l'on peut donc avantageusement travailler à une température comprise entre 0 et 40° C, de préférence entre 15 et 25° C.

Un autre avantage de l'invention est que le procédé n'est pas sensible à la présence des ions que l'on trouve naturellement dans l'eau (alcalin, alcalino-terreux).

Dans une installation industrielle de purification du zirconium, on prévoit, selon une modalité préférée, d'installer plusieurs colonnes ou analogues disposées en parallèle et alimentées l'une après l'autre, de manière a disposer toujours d'une colonne ou analogue prête à l'emploi, conditionnée, ou re-conditionnée, prête à recevoir la solution à traiter résultant de l'étape (1). De la sorte, il est possible d'opérer une purification en continu d'une solution issue de la carbochloration initiale du minerai zircon. Les opérations de purification du zirconium et/ou du hafnium, de nettoyage, e.g. rinçage à la solution acide, de décrochage à la solution aqueuse et de re-conditionnement de la résine sont menées comme décrit supra.

L'installation peut fonctionner par gravité, mais on préfère pousser les solutions au travers des colonnes ou analogues, et de manière plus préférée, les colonnes ou analogues sont alimentées par le bas et les solutions sont amenées à circuler de bas en haut.

Le procédé nécessite un outillage réduit, à savoir une ou plusieurs colonne(s) ou analogue(s) et pompe(s) d'injection et/ou d'extraction.

Le volume de résine, les dimensions des colonnes ou analogues, la granulométrie des particules de résine, leur nature et le débit des solutions sont des paramètres de fonctionnement qui permettent à l'homme du métier d'optimiser une installation en fonction des quantités de métal à traiter.

Les composés purs du zirconium ou du hafnium obtenus se présentent sous la forme d'oxychlorures $ZrOCl_2$ et $HfOCl_2$. Les méthodes pour obtenir le zirconium métal ou le hafnium métal, à partir de ces oxychlorures, existent et sont connues de l'homme du métier. Les oxychlorures peuvent ainsi être transformés en hydroxydes ($Zr(OH)_4$ ou $Hf(OH)_4$), déshydratés en $ZrO_2$ et $HfO_2$, puis carbochlorés et réduits par le procédé de Kroll permettant de récupérer Zr et Hf métal (Nouveau Traité de Chimie Minérale, Paul Pascal, Tome IX, p 254-269). Suivant une autre méthode, on procède à l'évaporation de la solution d'oxychlorures, puis à la carbochloration et à la réduction en métal.

L'invention va être maintenant décrite plus en détail, à l'aide des exemples et modes de réalisation décrits ci-après, présentés à titre d'exemples non limitatifs.

1. Partie expérimentale

1.1. Produits utilisés

1.1.1. Source de zirconium et de hafnium

Les études de séparation zirconium/hafnium ont été réalisées à partir de tétrachlorures de zirconium et de hafnium de ratios en poids 97,5/2,5 (tel qu'obtenu après carbochloration du minerai zircon).

1.1.2. Résines

Les résines utilisées pour l'extraction solide-liquide du zirconium et de l'hafnium sont des résines de type ammonium quaternaires et des azines:

* La résine Dowex® 1X8 est un chlorure d'ammonium triméthylé greffé sur une matrice styrène-DVB, avec un taux de fonctionnalisation de 3,5 meq/g de résine sèche. La résine Dowex® 1X8 est fournie par Aldrich. Granulométrie : 150-300 micromètres.
* La résine Reillex™ HPQ est un chlorure de N-méthyl-poly-(4-vinylpyridine). Sa capacité maximale est de 4meq/g de résine sèche. Sa teneur en eau est de 67-75%. Granulométrie : 250-595 micromètres.

Structures des résines utilisées :

a-Dowex ®1X8,

b-Reillex ™HPQ,

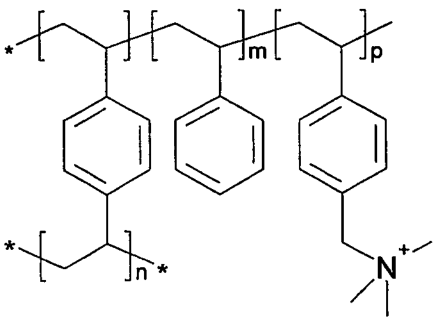

- a -

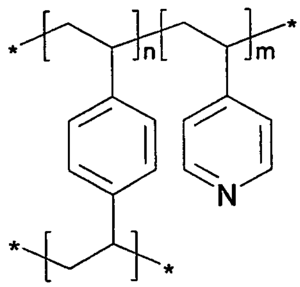

- b -

1.1.3. Solvant

acide chlorhydrique 37% en poids dans l'eau

1.2. Analyses par ICP-AES

Les phases aqueuses sont analysées par ICP-AES (Inductively Coupled Plasma - Atomic Emission Spectroscopy). Les mesures sont réalisées sur un spectrophotomètre Spectro D de marque Spectro. Le zirconium est mesuré à une longueur d'onde de 339,198 nm et le hafnium à 282,022 nm. L'incertitude sur les mesures est de $\pm$0,2mg/L.

1.3. Définitions des constantes utilisées en extraction solide-liquide

Ci : concentration initiale en métal (mg/L)

Cf : concentration finale en métal (mg/L)

$Vol_{aq}$ : volume de la phase aqueuse au contact de la résine

m : masse de résine

E : extraction (%)

D : coefficient de distribution (mL/g)

D(Zr) : coefficient de distribution du zirconium (mUg).

D(Hf) : coefficient de distribution de l'hafnium (mUg).

Le pourcentage d'extraction se définit selon la formule suivante :

$$E = \frac{(Ci - Cf)}{Ci} \times 100$$

L'évaluation des propriétés d'extraction des complexants utilisés vis-à-vis du zirconium et du hafnium s'effectue en comparant les coefficients de distribution. Cette constante est déterminée expérimentalement par le dosage de la phase aqueuse avant et après extraction.

$$D = \left[\frac{Ci\text{-}Cf}{Cf}\right] X \left[\frac{Vol_{aq}}{m}\right]$$

La sélectivité S(Zr/Hf) en zirconium par rapport au hafnium est définie comme le rapport des coefficients de distribution D(Zr) et D(Hf).

$$S(Zr/Hf) = \frac{D(Zr)}{D(Hf)}$$

1.4. <u>Expériences</u>

1.4.1. <u>Préparation de la phase aqueuse</u>

Des solutions aqueuses à 3500-4000mg/L en zirconium sont préparées par agitation magnétique, en dissolvant la poudre de tétrachlorures de zirconium et de hafnium (de rapport 97,5/2,5 - % en poids) dans des solutions d'acide chlorhydrique dont les concentrations varient de 0 à 12mol/L.

1.4.2. <u>Mode opératoire</u>

La séparation du zirconium et du hafnium s'effectue par extraction solide-liquide avec des résines. Les flacons sont agités à l'aide d'un agitateur mécanique horizontal de type vibramax 100 (Bioblock scientific) pendant 10 minutes. Les expériences sont réalisées à température ambiante. Les phases aqueuses sont ensuite dosées par ICP-AES. Les pourcentages d'extraction et les coefficients de distribution du zirconium et du hafnium peuvent être déterminés. La réextraction est réalisée avec de l'eau distillée. Le dosage par ICP-AES de cette phase aqueuse permet de calculer le pourcentage de réextraction pour Zr et Hf. Ensuite, les phases aqueuses sont agitées avec l'extractant (résine) pour effectuer l'extraction. La concentration en HCl est contrôlée dans toutes les solutions par dosage acido-basique de la phase aqueuse par de la soude 0,5mol/L en présence de phénolphtaléïne.

1.4.3 <u>Résultats</u>

Les expériences sur l'extraction de Zr/Hf sur le mélange (97,5/2,5) en fonction de la concentration en HCl ont été réalisées sur les résines Reillex HPQ et Dowex 1X8.

Tableau 1 : Effet de la concentration de HCl sur la séparation Zr/Hf avec la résine Dowex ®1X8 ; [Zr]=3500-4000mg/L ; résine Dowex®1X8:m=1g; $vol_{aq}$=10mL ; agitation=10min ; température ambiante.

| [HCl] mol/L | extraction Zr (%) | extraction Hf (%) | D (Zr) (mL/g) | D(Hf) (mL/g) | S (Zr/Hf) |
|---|---|---|---|---|---|
| $H_2O$ | 0 | 0 | 0 | 0 | ND |
| 5 | 1,6 | 2,1 | 0,2 | 0,2 | ND |
| 8,5 | 6,2 | 2,1 | 0,6 | 0,2 | 3 |
| 9,5 | 25,8 | 5,3 | 3,5 | 0,6 | 5,8 |
| 12 | 35,6 | 21,7 | 5,5 | 2,8 | 2 |

ND : valeurs non déterminées car le pourcentage d'extraction est trop faible.

Tableau 2 : Effet de la concentration en HCl sur la séparation Zr/Hf avec la résine Reillex™ HPQ [Zr]=3500-4000mg/L ;résine Reillex™ HPQ:m=1g;$vol_{aq}$=10mL ; agitation=10min ; température ambiante.

| [HCl] mol/L | extraction Zr (%) | extraction Hf (%) | D (Zr) (mL/g) | D(Hf) (mL/g) | S (Zr/Hf) |
|---|---|---|---|---|---|
| $H_2O$ | 2,9 | 1,9 | 0,3 | 0,2 | ND |
| 7 | 8,9 | 1,1 | 0,9 | 0,1 | 9 |
| 8,5 | 57,2 | 11,6 | 13,2 | 1,3 | 10,1 |
| 9,5 | 91,5 | 66,3 | 107,6 | 19,7 | 5,5 |

ND : valeurs non déterminées car le pourcentage d'extraction est trop faible.

1.5. Description d'une installation fonctionnant selon le principe de l'invention

Le mélange de tétrachlorures de zirconium et de hafnium dans un rapport 97,512,5, issu de la carbochloration initiale du minerai zircon, est dissout dans de l'acide chlorhydrique 9,5N (cette concentration présente un bon compromis entre sélectivité S et capacité d'extraction évaluée au travers du coefficient de distribution D). Cette solution est introduite dans une colonne, contenant une résine selon l'invention, pré-conditionnée avec HCl. Le hafnium n'est pas retenu par la résine et est donc récupéré en sortie de colonne (étape 1). Une fois la résine saturée en zirconium, elle est lavée par HCl (étape 2), et le produit de lavage est récupéré pour être ensuite retraité comme à l'étape 1. L'étape suivante 3 est un lavage à l'eau, qui permet de décrocher le zirconium et de le récupérer. La colonne est alors régénérée (étape 4) et peut être réutilisée, après un nouveau conditionnement avec HCl.

Il doit être bien compris que l'invention définie par les revendications annexées n'est pas limitée aux modes de réalisation particuliers indiqués dans la description ci-dessus, mais en englobe les variantes qui ne sortent du cadre de la présente invention.

## Revendications

1. Procédé permettant de séparer le zirconium du hafnium d'un mélange de $ZrCl_4$ et $HfCl_4$ contenant 3 % en poids de Hf exprimé par rapport à Zr + Hf ou moins, le procédé comprenant les étapes suivantes :

   (1) hydrolyser le mélange $ZrCl_4$ et $HfCl_4$ dans une solution aqueuse d'acide inorganique fort, de manière à former une solution aqueuse acide ayant de 7 à 12 moles d'acide par litre ;
   (2) faire passer la solution obtenue à l'étape (1) dans une résine échangeuse d'anions ;
   (3) éventuellement éluer une fraction de la solution aqueuse acide, enrichie en hafnium ;
   (4) débarrasser la résine de la solution aqueuse acide contenant Zr et Hf ;
   (5) faire passer dans la résine une solution aqueuse pour décrocher les composés du zirconium fixés à la résine, et récupérer une fraction enrichie en zirconium.

2. Procédé selon la revendication 1, dans lequel, à l'étape (2), la résine est conditionnée au préalable avec une solution d'acide inorganique fort ayant de 7 à 12 moles d'acide par litre.

3. Procédé selon la revendication 1 ou 2, dans lequel l'acide inorganique fort est choisi parmi HCl et $H_2SO_4$.

4. Procédé selon la revendication 3, dans lequel l'acide inorganique fort est HCl.

5. Procédé selon l'une quelconque des revendications précédentes, dans lequel la solution aqueuse acide contient de 7,5 à 9,5 moles d'acide par litre.

6. Procédé selon l'une quelconque des revendications précédentes, dans lequel la résine échangeuses d'anions porte des groupements amine, ammonium ou azine.

7. Procédé selon l'une quelconque des revendications précédentes, dans lequel, à l'étape (5), on procède à un lavage de la résine à l'aide d'une solution aqueuse contenant de 0 à 7 moles d'acide par litre, cette concentration étant cependant inférieure à la concentration de la solution d'acide inorganique utilisée précédemment.

8. Procédé selon la revendication 7, dans lequel la solution aqueuse est de l'eau.

9. Procédé selon la revendication 7, dans lequel on utilise successivement au moins deux solutions aqueuses de concentrations décroissantes en acide.

10. Procédé selon la revendications 9, dans lequel on utilise de l'eau en dernier lieu.

11. Procédé selon l'une quelconque des revendications 1 à 10, dans lequel, à l'étape (4), on procède au rinçage de la résine à l'aide d'une solution d'acide inorganique fort ayant de 7 à 12 moles d'acide par litre, et ayant un nombre de moles d'acide par litre sensiblement identique ou supérieure à la solution formée à l'étape (1).

12. Procédé selon l'une quelconque des revendications 1 à 10, dans lequel, à l'étape (4), on vide la résine de son contenu liquide et, éventuellement, on procède au rinçage de la résine à l'aide d'une solution d'acide inorganique fort ayant de 7 à 12 moles d'acide par litre, et ayant un nombre de moles d'acide par litre sensiblement identique ou supérieure à la solution formée à l'étape (1).

13. Procédé selon l'une quelconque des revendications précédentes, dans lequel, à l'étape (3) on récupère une fraction riche en hafnium.

## Claims

1. Method for separating zirconium and hafnium in a mixture of $ZrCl_4$ and $HfCl_4$ containing 3 % by weight, or less, of Hf, expressed in relation to Zr + Hf, the method comprising the following steps:

   (1) hydrolysing the mixture of $ZrCl_4$ and $HfCl_4$ in an aqueous solution of strong inorganic acid, so as to form an aqueous acid solution containing 7 to 12 moles of acid per litre;
   (2) passing the solution obtained in step (1) into an anion exchange resin;
   (3) optionally eluting a fraction of the hafnium-enriched aqueous acid solution;
   (4) freeing the resin of the aqueous acid solution containing Zr and Hf;
   (5) passing an aqueous solution into the resin in order to detach the zirconium compounds fixed to the resin and recover a zirconium-enriched fraction.

2. Method according to claim 1, wherein, in step (2), the resin is treated beforehand with a strong inorganic acid solution containing 7 to 12 moles of acid per litre.

3. Method according to claim 1 or 2, wherein the strong inorganic acid is selected from among HCl and $H_2SO_4$.

4. Method according to claim 3, wherein the strong inorganic acid is HCl.

5. Method according to one of the preceding claims, wherein the aqueous acid solution contains 7.5 to 9.5 moles of acid per litre.

6. Method according to one of the preceding claims, wherein the anion exchange resin carries amine, ammonium or azine groups.

**7.** Method according to one of the preceding claims, wherein, in step (5), the resin is washed with an aqueous solution containing 0 to 7 moles of acid per litre, this concentration being, however, less than the concentration of the inorganic acid solution used previously.

**8.** Method according to claim 7, wherein the aqueous solution is water.

**9.** Method according to claim 7, wherein at least two aqueous solutions with decreasing concentrations of acid are used successively.

**10.** Method according to claim 9, wherein water is used last.

**11.** Method according to one of claims 1 to 10, wherein, in step (4), the resin is rinsed using a strong inorganic acid solution having 7 to 12 moles of acid per litre and having a number of moles of acid per litre that is substantially identical to or greater than that of the solution formed in step (1).

**12.** Method according to one of claims 1 to 10, wherein, in step (4), the resin is drained of its liquid content and optionally the resin is rinsed using a strong inorganic acid solution having 7 to 12 moles of acid per litre and having a number of moles of acid per litre that is substantially identical to or greater than that of the solution formed in step (1).

**13.** Method according to one of the preceding claims, wherein in step (3) a hafnium-rich fraction is recovered.

**Patentansprüche**

**1.** Verfahren, welches ermöglicht, Zirkonium von Hafnium aus einem Gemisch von $ZrCl_4$ und $HfCl_4$, das 3 Gew.-% ausgedrücktes Hf, im Verhältnis zu Zr + Hf, oder weniger aufweist, zu trennen, wobei das Verfahren die folgenden Schritte aufweist:

(1) Hydrolysieren des Gemischs aus $ZrCl_4$ und $HfCl_4$ in einer wässrigen Lösung einer starken anorganischen Säure, so dass eine wässrige saure Lösung mit 7 bis 12 Mol Säure pro Liter gebildet wird,
(2) Leiten der in Schritt (1) erhaltenen Lösung in ein Anionenaustauschharz,
(3) optionales Eluieren einer Fraktion der wässrigen sauren Lösung, die mit Hafnium angereichert ist,
(4) Befreien des Harzes von der Zr und Hf aufweisenden wässrigen sauren Lösung,
(5) Leiten einer wässrigen Lösung in das Harz, um die an das Harz angelagerten Zirkoniumverbindungen zu lösen und eine mit Zirkonium angereicherte Fraktion wiederzugewinnen.

**2.** Verfahren gemäß Anspruch 1, wobei in Schritt (2) das Harz im Vorfeld mit einer Lösung einer starken anorganischen Säure behandelt wird, die 7 bis 12 Mol Säure pro Liter aufweist.

**3.** Verfahren gemäß Anspruch 1 oder 2, wobei die starke anorganische Säure aus HCl und $H_2SO_4$ ausgewählt wird.

**4.** Verfahren gemäß Anspruch 3, wobei die starke anorganische Säure HCl ist.

**5.** Verfahren gemäß einem der vorhergehenden Ansprüche, wobei die wässrige saure Lösung 7,5 bis 9,5 Mol Säure pro Liter aufweist.

**6.** Verfahren gemäß einem der vorhergehenden Ansprüche, wobei das Anionenaustauschharz Amin-, Ammonium- oder Azin-Gruppen aufweist.

**7.** Verfahren gemäß einem der vorhergehenden Ansprüche, wobei in Schritt (5) ein Waschen des Harzes mit Hilfe einer 0 bis 7 Mol Säure pro Liter aufweisenden wässrigen Lösung durchgeführt wird, wobei diese Konzentration jedoch niedriger als die Konzentration der zuvor verwendeten anorganischen sauren Lösung ist.

**8.** Verfahren gemäß Anspruch 7, wobei die wässrige Lösung Wasser ist.

**9.** Verfahren gemäß Anspruch 7, wobei nacheinander mindestens zwei wässrige Lösungen mit sinkender Säurekonzentration verwendet werden.

**10.** Verfahren gemäß Anspruch 9, wobei zuletzt Wasser verwendet wird.

**11.** Verfahren gemäß einem der Ansprüche 1 bis 10, wobei das Spülen des Harzes in Schritt (4) mit Hilfe einer Lösung einer starken anorganischen Säure erfolgt, die 7 bis 12 Mol Säure pro Liter aufweist und die eine Anzahl an Mol Säure pro Liter aufweist, die im Wesentlichen größer oder gleich der in Schritt (1) gebildeten Lösung ist.

**12.** Verfahren gemäß einem der Ansprüche 1 bis 10, wobei in Schritt (4) der flüssige Bestandteil des Harzes entfernt wird und das Spülen des Harzes optional mit Hilfe einer Lösung einer starken anorganischen Säure erfolgt, die 7 bis 12 Mol Säure pro Liter aufweist und eine Anzahl an Mol Säure pro Liter aufweist, die im Wesentlichen größer oder gleich der in Schritt (1) gebildeten Lösung ist.

**13.** Verfahren gemäß einem der vorhergehenden Ansprüche, wobei in Schritt (3) eine an Hafnium reiche Fraktion wiedergewonnen wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2250707 A
- FR 2629360 A


### Littérature non-brevet citée dans la description


- **Paul Pascal ; Tome IX.** *Nouveau Traité de Chimie Minérale,* 254-269